# EUROPEAN PATENT SPECIFICATION

(11) **EP 4 413 252 B1**
(45) Date of publication and mention of the grant of the patent: **12.08.2026**
(21) Application number: 21959797.8
(22) Date of filing: 22.12.2021
(51) Int. Cl.: F03D 1/06, F16B 37/12

(54) **A ROOT BUSHING, A BUSHING INSERT THEREOF, A WIND TURBINE BLADE COMPRISING SAID ROOT BUSHING AND A MANUFACTURING METHOD THEREOF**
WURZELBUCHSE, BUCHSENEINSATZ DAFÜR, WINDTURBINENSCHAUFEL MIT BESAGTER WURZELBUCHSE UND HERSTELLUNGSVERFAHREN DAFÜR
BAGUE D'EMPLANTURE, SON INSERT DE BAGUE, PALE D'ÉOLIENNE COMPRENANT LADITE BAGUE D'EMPLANTURE ET SON PROCÉDÉ DE FABRICATION

(30) Priority: 05.10.2021 DK PA202170490
(43) Date of publication of application: 14.08.2024
(73) Proprietor: Envision Energy Technology Pte Ltd., 079903 Singapore (SG)
(72) Inventor: JENS, Glud, Wuxi, Jiangsu 214443 (CN); GIANCARLO, Girolomini, Wuxi, Jiangsu 214443 (CN); LARS, Overgaard, Wuxi, Jiangsu 214443 (CN)
(74) Representative: Winter, Brandl - Partnerschaft mbB
(86) International application number: PCT/CN2021/140274
(87) International publication number: WO 2023/056711

(56) References cited:
- WO-A2-2012/140039
- WO-A2-2012/140039
- CN-A- 109 139 357
- CN-A- 111 684 154
- CN-A- 111 684 155
- CN-A- 112 238 566
- CN-U- 202 597 411
- CN-U- 209 705 035
- US-A1- 2019 316 564
- US-A1- 2020 347 820

## Description

### Field of the Invention

The present invention relates to a root bushing and bushing insert for embedding in a root portion of a wind turbine blade, where the root bushing has a threaded outer surface and a main bolt cavity for receiving a main bolt.

The present invention also relates to a wind turbine blade and a method of manufacturing the wind turbine blade.

### Background of the Invention

It is known that wind energy production has rapidly increased over the last decades and generally recognised as a clean and economic renewable energy source. To meet the increased demand for energy production, wind turbines are getting larger to reduce the costs of energy (COE). This increases the weight and costs of the components thereof, and particularly the size and weight of the wind turbine blades has increased. This raises the need for solutions that save materials and reduce the total weight of the wind turbine blades.

As the size of the wind turbine blades increases, so does the outer root diameter of the wind turbine blade. This increases the required amount of reinforcement materials and the total number of main bolts distributed along the circumference of the root end. This in turn also requires hubs to have an increased blade root flange size to match the increased root end of the wind turbine blade.

EP 2917568 B1 discloses various cross-sectional oval profiles of a root bushing, wherein the total thickness of the root bushing is greater than the thickness of adjacent insert elements, thereby increasing the contact surface area with the inner fibrous layers and outer fibrous layers. EP 3697603 A1 discloses various cross-sectional profiles of the bone-shaped inserts arranged between the root bushings, wherein a spacing is formed between the side surfaces of the insert and the outer surface of the adjacent bushings. In these embodiments, the bone-shaped inserts can be formed by a single piece or multiple sub-pieces.

EP 3111083 B1 discloses a root bushing for embedding in a wind turbine blade, where the bushing housing is provided with a corrugated outer surface. The corrugations are shaped as individual hills and valleys, each extending around the circumference of the bushing housing. The hills and valleys are arranged symmetrically and act to a provide mechanical self-locking connection between the laminate and the bushing. This root bushing is provided with an internal through hole, however, this needs to be closed off to prevent resin from entering the main bolt cavity. A time-consuming milling process is required to form the symmetrical hills and valleys, which may introduce thermal stresses in the bushing housing and thus cause factures or failures in the bushing.

WO 2019/110070 A1 and WO 2019/110071 A1 disclose a method of producing prefabricated two bushing inserts by diagonally cutting a precured insert body into two equal pieces. The bushing housing has an outer surface with grooves spaced apart by ridges. The grooves and ridges are shaped as waves, where the grooves are shallow and have a large pitch. This allows the transitional fibre layers to be easily drawn inside the grooves and anchored by one or more windings. Pultruded elements are then arranged relative to the wrapped bushing housing to form a rectangular or trapezoidal cross-sec-tional profile. The entire dry structure is then placed in an insert mould and infused with resin, which is finally cured to form the insert body. Afterwards, the insert body is cut diagonally to form a pair of bushing inserts.

In this solution, the grooves may be shaped as individual circumferential grooves or a helical continuous groove. However, this design also requires complex and time-consuming machining, which may introduce thermal stresses in the bushing housing.

WO 2019/110070 A1 and WO 2019/110071 A1 further discloses that the main bolt cavity is separated from the core cavity by a plug. It is stated that the plug may be integrated into the bushing housing. The plug may also be added as a separate element, but no further details are provided about this configuration or how to secure this separate plug.

CN 209705035 U discloses a root bushing for a wind turbine blade, where the outer surface comprises an intermediate threaded portion arranged between two planar end portions. At one end, a recess is formed to enable contacting an end plug. A waterproof filling material is introduced into the internal bore via the recess, thereafter the end plug is pressed into a firm connection with the recess by a pressing tool. As the main bolt is screwed into the bushing, the bolt end will contact the waterproof filling material.

Another prior art bushing design comprises an outer surface with a threaded portion, where the valleys have a semi-circular cross-sectional profile and sharp hills between adjacent valleys. This design also requires complex and time-consuming machining.

Thus, there is a need for an improved bushing design that allows for faster and cheaper production.

### Object of the Invention

One object of the present invention is to provide a bushing, a bushing insert, a wind turbine blade and a method that overcomes the abovementioned problems of the prior art, or at least provides an alternative solution.

One object of the present invention is to provide a bushing, a bushing insert, a wind turbine blade and a method that allows for a faster production and reduces production costs.

One object of the present invention is to provide a bushing, a bushing insert, a wind turbine blade and a method that allows for an easier lay-up of the blade root reinforce-ments.

### Description of the Invention

One object of the invention is achieved by a wind turbine comprising a root bushing for a wind turbine blade according to claim 1, comprising a bushing housing having an outer surface, where a main bolt cavity is arranged inside the bushing housing at a first end, and the outer surface comprises a root portion and an outer threaded portion, wherein the threaded portion is formed as a helical thread with an ISO metric cross-sectional profile. The invention is set out in the appended set of claims.

This provides a root bushing that allows for faster production and reduces production costs. This allows the outer threaded surface to be manufactured using standard milling tools and a minimum of machining steps, with no need for custom-made tools or multiple machining steps with different tools. The present bushing design also reduces the risk of thermal stresses occurring in the bushing housing during production. This in turn ensures a higher production quality and reduces the risk of a structural failure during operation.

Here, the term "ISO metric" is defined according to international standards, such as ISO 68-1. The present thread has a symmetrical cross-sectional profile, preferably a symmetric V-shaped or substantially V-shaped profile. The present thread forms a continuous or helical thread around the outer surface of the bushing housing.

The root bushing comprises a bushing housing having an outer surface, extending from a first end to a second end. The first end may be arranged at a root end of the wind turbine blade and the second end may face the tip end of the wind turbine blade, when embedded in the wind turbine blade. The bushing housing may be made of metal or metal alloy, e.g. steel or steel alloy.

The bushing housing has an outer length, L, and an outer diameter, Do, measured in a longitudinal direction and a thickness direction, respectively. The outer length L may also define a relative distance of 1, while the outer diameter D0 may also define a rela-tive thickness/diameter of 1. The dimensions of the outer ISO metric thread may be selected as function of the outer diameter of the bushing housing. For example, but not limited to, the total length L may be between 350mm -380mm. For example, but not limited to, the outer diameter Do may be between 60mm -70mm. For example, but not limited to, the dimensions of the outer ISO metric thread may be between M60 -M70.

A first internal hole, or main bolt cavity, is arranged at the first end and extends towards the second end. The first internal hole is adapted to receive and hold a main bolt during installation of the wind turbine blade. The first internal hole has a first depth and a first inner diameter. The present invention allows for the use of shorter bolts and/or thinner bolts compared to conventional root bushings.

According to one embodiment, the outer threaded portion extends from a first start position to a second end of the bushing housing wherein the first start position is deter-mined as a relative distance, Lₒ, from the first end and is selected between 0 -0.25.

The root bushing may have a root portion arranged at the first end and may extend to a first start position of the outer threaded portion. The outer threaded portion may extend from the first start position to the second end. The root portion may have a planar outer surface, i.e. without any grooves or threads. The root portion may be configured to absorb compression loads during operation as it is compressed by the bolted connection. This threaded portion may be configured to transfer loads between the bushing and the blade shell during pre-tensioning and during operation of the wind turbine.

Both the root portion and the outer threaded portion has a local outer diameter. Preferably the local outer diameter of the outer threaded portion may be equal to the local outer diameter of the root portion. Thus, the root bushing may have a constant outer diameter along its length. This saves on materials and further reduces production costs.

Conventional root bushings, such as in WO 2019/110070 A1 and WO 2019/110071 A1, typically have an enlarged root portion with a greater outer diameter than the outer diameter of the adjacent outer threaded portion. This leads to increased material waste and additional machining time.

The first start position may be determined as a relative distance from the first end, preferably as ratio of the local length, Lₒ, of the root portion to the total length L of the bushing housing. For example, but not limited to, the first start position may be selected between 0-0.25.

According to one embodiment, a cap element and a root insert cavity are further ar-ranged inside the bushing housing, where the root insert cavity is arranged at a second end of the bushing housing and the cap element is configured to separate the main bolt cavity from the root insert cavity, and where the position of the cap element is deter-mined as a relative distance, L_{w}, from the second end and is selected between 0 -0.35.

A second internal hole, or root insert cavity, may be arranged at the second end of the bushing housing and may extend towards the first end. The second internal hole may be adapted to receive an end portion of an insert element made of a core material. The core material may be made of metal, foam or wood, for example but not limited to balsa, PVC (polyvinyl chloride), PET (polyethylene-terephthalate), polyurethane (PU) or pol-ymer (e.g. fibre reinforced polymer, FRP) . The second internal hole may have a second inner diameter and a second depth.

According to one embodiment, the bushing housing has a local wall thickness, D_{w}, measured at the second end, wherein the local wall thickness D_{w} is selected between 0.5mm -5mm.

The second inner hole may have an inner surface projecting inwards from the second end. The second inner hole may have an overall cone shaped profile, where the largest inner diameter may be located at the second end. The root bushing may have a local wall thickness, D_{w}, measured at the second end. This local wall thickness D_{w} may be determined as a relative wall thickness or as a difference between the inner diameter of the second inner hole and the outer diameter of the bushing housing. For example, but not limited to, the local wall thickness D_{w} may be selected between 0.5mm -5mm.

A cap element may be arranged within the bushing housing between the first and second inner holes to separate the two cavities. The cap element may be positioned at a distance from one end, thus forming an internal cap. The cap element may be made of metal or metal alloy, e.g. steel or steel alloy, a polymer material or a closed-cell foam material. This prevents the resin matrix material from entering the main bolt cavity during infusion.

The position of the cap element may be determined as a relative distance from the second end, preferably as a ratio of the distance L_{w} to the total length L of the bushing housing. For example, but not limited to, the relative position of the cap element may be selected between 0 -0.35.

According to one embodiment, the cap element is either integrated into the busing housing or provided as a separate element, the separate element is shaped to be secured into the bushing housing at the relative distance L_{w}.

The cap element may simply be integrated into the bushing housing, thereby forming a permanent seal between the two cavities. This seal may thus be produced when machining the main bolt cavity and the root insert cavity of the root bushing.

The cap element may alternatively be formed as a separate element, which may be secured inside the bushing housing. The first and second inner holes may thus be shaped to form a continuous inner hole extending from the first end to the second end. This allows for faster production and better tolerance control.

The cap element may be secured to the bushing housing by press-or form-fitting. Alternatively, the cap element may be secured by a threaded connection. The cap element may be provided with an outer thread, which may engage an inner thread on the bushing housing. This inner thread may be a separate inner thread or form part of the inner threaded portion for the main bolt.

The cap element may optionally comprise a shoulder adapted to contact a matching shoulder on the bushing housing. The shoulder on the bushing housing may be arranged relative to the bottom of the root insert cavity. This defines a stop for the cap element.

According to one embodiment, the main bolt cavity comprises an inner threaded portion extending from a second start position to a stop position, wherein the cap element is arranged adjacent to or within the inner threaded portion, wherein the second start position is determined as a relative distance, Lc , from the first end and is selected between 0 -0.5.

The bushing housing may further comprise an inner threaded portion arranged within the first inner hole. This threaded portion may extend from a second start position to a stop position, and thus have a local length. The inner threaded portion may also be a helix thread, preferably having an ISO metric cross-sectional profile as defined above. The dimensions of this inner ISO metric thread may be selected as function of the inner diameter of the first inner hole or main bolt cavity. This allows the main bolt to be connected to the root bushing.

The second start position may be determined as relative distance from the first end, preferably as a ratio of a local length, L_{c}, of a portion of the first inner hole to the total length L of the bushing housing. For example, but not limited to, the second start position may be selected between 0 -0.5.

The cap element may be arranged adjacent to this inner threaded portion, i.e. not positioned on this threaded portion. Alternatively, the cap element may be arranged the inner threaded portion at the stop position. Alternatively, the cap element may be positioned at a distance from the inner threaded portion. This allows the positioning of the cap element to be adapted to the configuration of the main bolt cavity.

According to one embodiment, the root insert cavity has an inner surface extending inwards from the second end, where the inner surface is a curved surface with a radius, R, of at least 500mm.

The inner surface of the second inner hole may be planar seen in the longitudinal direction. Alternatively, the inner surface may be curved to form a smooth transition towards the second end. The second end thus will have a good structural strength and enables the resin matrix material to fill the space between the end portion of the insert element and the inner surface of the root insert cavity. The root insert cavity may thus be formed by arc machining, which contributes to a faster production time.

The curvature of the inner surface may be determined e.g. as a function of the second depth, the maximum inner diameter and/or the minimum inner diameter. For example, but not limited to, the curvature of the inner surface may have a radius R of 500mm or more.

According to one embodiment, the bushing housing has an outer diameter and the main bolt cavity has an inner diameter measured at the inner threaded portion, where a ratio of the outer diameter to the inner diameter is selected between 1.7 -1.9.

The inner diameter, Dₜ, of the main bolt cavity may be measured at the inner threaded portion. This measurement also defines the dimensions of the inner ISO metric thread.

The size of the root bushing may be determined as a ratio of the outer diameter Do of the bushing housing to the inner diameter Dt of the inner threaded portion. For example, but not limited to, the ratio may be selected between 1.7 -1.9. This allows for better alignment during lay-up and more fibrous material to be added to the root end of the wind turbine blade, which in turns also allows for a reduction in the outer root diameter for larger wind turbine blade.

According to one embodiment, at least one set of windings is arranged at the threaded portion on the outer surface.

A yarn may be wrapped around at least a part of the outer surface of the root bushing. Preferably, the yarn is wrapped around the threaded portion of the root bushing. One or more layers of windings may be arranged along the outer surface. In one embodiment, at least one layer of first windings may be arranged directly on the threaded portion. This improves the infusion process and enhances the bonding quality.

Optionally, at least one fibrous layer and/or at least one layer of second windings may be arranged on the layer (s) of first windings. This may further improve the infusion process and the bonding quality.

The present root bushing may be fitted with an insert element at the second end to form a root bushing insert. The insert element may simply be held in place by friction or form-fitting. The insert element may alternatively be bonded to the root bushing by applying an adhesive between the contacting surfaces. The adhesive may be a pressure sensitive adhesive.

The insert element may have an end portion adapted to be inserted into the root insert cavity of the busing housing. The end portion may have a cone shaped profile with a planar or curved surface, preferably following the profile of the root insert cavity. The insert element may gradually taper off towards the opposite end to form a smooth transition between the inner and outer fibrous layers of the wind turbine blade.

Optionally, at least one set of windings and/or at least one fibrous layer is arranged on at least a portion of the outer surface of the bushing and/or the insert element.

The abovementioned yarn wrapped around the treaded portion of the outer surface of the bushing may extend further along at least a portion of the outer surface of the insert element. Further, the abovementioned one or more layers of windings may extend further along the outer surface of the insert element. Alternatively, individual yarns may be wrapped around the bushing and the insert element to form individual layers of wind-ings.

Optionally, at least one fibrous layer and/or at least one layer of second windings may be arranged on the layer (s) of windings arranged on the insert element. This may further improve the infusion process and the bonding quality.

Alternatively, yarns may be wrapped around only the insert element or the bushing.

According to one embodiment, one or more additional insert elements are positioned relative to the root bushing and the insert element, wherein said one or more additional insert elements extend along the outer surfaces of the root bushing and the insert ele-ment.

Two or more additional insert elements may extend along the outer surface of the root bushing and/or the insert element. The additional insert elements may be distributed along the circumference of the root bushing and/or the insert element to form the desired cross-sectional profile of the root bushing insert. The additional insert elements may be made of any structural materials capable of transferring shear loads to the bushing, such as pultruded elements, fibre rods, dry fibers or any combination thereof.

The additional insert elements may be arranged relative to the root bushing and/or insert element during the lay-up process in the wind turbine blade mould. This enables the root bushing insert to be assembled directly in the wind turbine blade mould.

Alternatively, the additional insert elements may be secured to the root bushing and/or insert element separately from the wind turbine blade mould to form a dry structure. The additional insert elements may be secured by adhesion or by straps, yarns or at least one fibrous layer wrapped around the additional insert elements, the root bushing and the insert element. Optionally, the additional insert elements may be arranged between the layers of first windings and the abovementioned fibrous layers and/or the layers of second windings. The dry structure may then be lifted into position on the wind turbine blade mould during the lay-up process.

An object of the present invention is further achieved by a wind turbine according to claim 1 comprising a wind turbine blade, the blade comprising a blade shell with a root end and a tip end, where a plurality of root bushings or root bushing inserts are embedded in the root portion of the blade shell, wherein the root bushings or root bushing inserts are configured as described above.

The present root bushing allows for a better adhesion between the root bushings and the fibrous layers of the root portion. Shorter and/or thinner bolts may thus be used, and additional layers of fibrous layers may be added to the root portion. This increases the structural strength of the root portion and allows a reduction in the main bolt circle diameter, particularly for large wind turbine blades.

According to one embodiment, a wedge element is arranged between a pair of adjacent root bushings or root bushing inserts, wherein the wedge element has an asymmetrical or symmetrical cross-sectional profile perpendicular to the longitudinal direction.

A wedge element may be arranged between each pair of root bushings. The wedge ele-ment may extend in the longitudinal direction along the root bushing and insert element. The wedge element may have an overall dog-bone shaped cross-sectional profile. The wedge element may be a pultruded element and/or be formed by a single piece or by multiple sub-pieces. The wedge element may be made of a fibrous layer or laminate.

The wedge element may have a symmetrical or asymmetrical cross-sectional profile around a symmetrical line perpendicular to the longitudinal direction. The symmetry line may be arranged parallel to the circumference direction or the thickness direction. The wedge element may have a local height in the thickness direction, which may be substantially equal to or less than a local height of the root bushing. This increases the total surface contact area with the fibrous layers, which allows for an improved adhesion between the fibrous layers and the root bushing. This also reduces the risk of wrinkles forming in the fibrous layers, particularly at the termination of the insert elements and wedge elements.

According to one embodiment, the root portion comprises a first root bushing and at least a second root bushing, wherein the start position of the inner threaded portion of the first root bushing differs from the start position of the inner threaded portion of at least the second root bushing.

The present invention may also comprise a set of root bushings or bushings insert for a wind turbine blade. The set may comprise a plurality of root bushings or bushings in-serts intended to be arranged in the root portion of the wind turbine blade. The number of individual root bushings may correspond to the amount of root bushings needed for forming the root portion of the wind turbine blade.

Preferably, the start position Lc of the inner threaded portion may vary between the individual root bushings or bushings inserts of the set. Alternatively, the root bushings or bushings inserts may be arranged in individual groups, each group having the same start position L_{c} of the inner threaded portion. For example, the start position of the inner threaded portion (e.g. the Lc /L ratio) of a first root bushing may differ from the start position of the inner threaded portion (e.g. the L_{c}'/L ratio) of at least a second root bushing. Optionally, the root portion may further comprise a third root bushing, a fourth root bushing, and so forth, each with a unique start position of the inner threaded portion that differs from the first root bushing and/or the second root bushing. The first root bushing or set of first root bushings and the second root bushing or set of second root bushings may be arranged in an alternative order, or another predetermined order, along the circumference direction of the root portion. For example, a root bushing with a shorter start position Lc may be positioned between an adjacent pair of root bushings with a longer start position L_{c}, or vice versa.

Thereby, the start position of the inner threaded portion does not coincide between all root bushings of the root portion, but instead it is staggered. This leads to an optimized shear stress distribution and allows for less material between two adjacent bushings, further leading to a blade root capable of accommodating more root bushings/bushing inserts on the same main BCD (Bolt Circle Diameter).

An object of the present invention is further achieved by a method of manufacturing a wind turbine blade according to claim 12, comprising the steps of:
- laying up one or more first fibrous layers in a blade mould,
- arranging a plurality of root bushings or root bushing inserts on the first fibrous layers, wherein the root bushings or root bushing inserts are configured as described above,
- optionally, arranging a plurality of wedge elements between the root bushings or root bushing inserts,
- laying up one or more second fibrous layers on top of the root bushings or root bushing inserts and optionally the wedge elements,
- infusing at least the first and second fibrous layers with a resin matrix material,
- curing the infused structure to form a blade shell component.

This allows the present root bushing or root bushing insert to be arranged in the wind turbine blade mould during the lay-up, and the infused together with the rest of the wind turbine blade. The present root bushings also allow for better alignment of the root bushings during lay-up and allow for more fibrous layers to be added. Thereby, large wind turbine blades can be manufactured with a reduced main bolt diameter.

The wind turbine blade mould is initially prepared for the moulding process. Then, one or more first fibrous layers forming the outer skin are laid up on the moulding surface. Blade reinforcements are then positioned on the first fibrous layers along the length of the wind turbine blade. This includes arranging a plurality of root bushings and insert elements on the root portion. Optionally, a wedge element may be arranged between each pair of root bushings. After which, one or more second fibrous layers forming the inner skin are laid up on the root bushings and, optionally, the wedge elements.

After completion of the lay-up, inlet channels and outlet channels of the vacuum pump and the resin mixing system are then arranged on the structure and the structure is enclosed in a vacuum bag. The structure, e.g. the fibrous layers, may then be infused with a resin matrix material. The resin matrix material may for example, but not limited to, epoxy, vinyl ester, polyurethane or thermoplastics. After the infusion process is com-plete, the infused structure is then set to cure. Once cured, the structure is lifted out of the wind turbine blade mould.

According to one embodiment, the method further comprises the step of wrapping a yarn around at least a portion of the outer surface of the bushing or bushing insert, wherein the yarn forms at least one layer of windings.

Prior to the lay-up of the bushings or bushing inserts, a yarn may be wrapped around at least the threaded portion of the outer surface of the bushing and/or along a portion of the outer surface of the insert element. This may be achieved by a manual process or an automated process. The yarn may be wrapped with a predetermined force to ensure a close contact with the outer surface of the bushing or insert element. This improves the infusion process and enhances the bonding quality.

Further layers of windings and/or fibrous layers may be wrapped around the bushing or insert element before the lay-up, if needed.

### Description of the Drawing

The invention is described by example only and with reference to the drawings, wherein:
- Fig. 1: shows an exemplary embodiment of a wind turbine,
- Fig. 2: shows an embodiment of the wind turbine blade according to the invention,
- Fig. 3: shows a first embodiment of the root portion,
- Fig. 4: shows a second embodiment of the root portion,
- Figs. 5a-b: show two exemplary embodiments of a bushing insert according to the invention,
- Fig. 6: shows an exemplary embodiment of the wedge element,
- Fig. 7: shows a first embodiment of the root bushing with a cap element according to the invention,
- Fig. 8: shows the outer surface of the root bushing of fig. 7,
- Fig. 9: shows an enhanced view of the second end of the root bushing,
- Fig. 10: shows the root bushing of fig. 7 without the cap element,
- Fig. 11: shows an enhanced view of the threaded portion of the outer surface,
- Figs. 12a-b: show two exemplary embodiments of the cap element,
- Fig. 13: shows a second embodiment of the root bushing and cap element, and
- Fig. 14: shows a third embodiment of the root bushing and cap element.

In the following text, the figures will be described one by one, and the different parts and positions seen in the figures will be numbered with the same numbers in the differ-ent figures. Not all parts and positions indicated in a specific figure will necessarily be discussed together with that figure.

### Detailed Description of the Invention

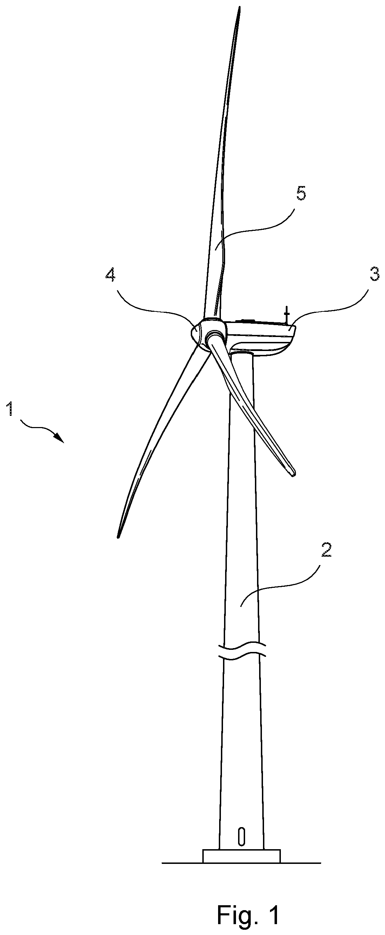

Fig. 1 shows an exemplary embodiment of a wind turbine 1 comprising a wind turbine tower 2, a nacelle 3 is arranged on top of the wind turbine tower 2, and a rotor is rotatably arranged relative to the nacelle 3. The rotor comprises a hub 4 connected to at least two wind turbine blades 5. Here, three wind turbine blades 5 are shown.

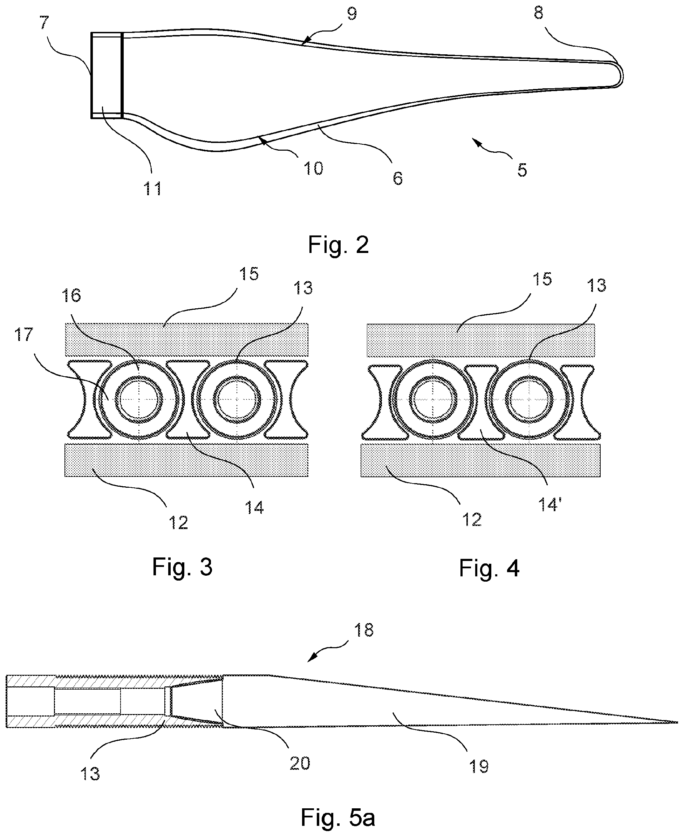

Fig. 2 shows an embodiment of the wind turbine blade 5, here only one blade shell component is shown. The blade shell component is arranged in a wind turbine blade mould 6. The wind turbine blade 5 extends from a root end 7 to a tip end 8 and further from a leading edge 9 to a trailing edge 10.

The root portion 11 of the wind turbine blade 5 comprises an array of root reinforce-ments, as illustrated in figs. 3-6.

Fig. 3 shows a first embodiment of the root portion 11 seen from the root end 7. The root portion 11 comprises one or more first fibrous layers 12 defining the outer skin of the wind turbine blade 5. A plurality of root bushings 13 are arranged on top of the first fibrous layers 12. A wedge element 14 is arranged between each pair of root bushings 13. One or more second fibrous layers 15 defining the inner skin of the wind turbine blade 5 are arranged on top of the root bushings 13 and wedge elements 14.

Here, the wedge elements 14 have a symmetrical cross-sectional profile around a symmetry line 16 parallel to the thickness direction. Optionally, the wedge elements 14 may also have a symmetrical cross-sectional profile around another symmetry line 17 parallel to the circumference direction.

Fig. 4 shows a second embodiment of the root portion 11 seen from the root end 7. Here, the wedge elements 14' have an asymmetrical cross-sectional profile around the symmetry line 16. Alternatively or additionally, the wedge elements 14' may also have an asymmetrical cross-sectional profile around the another symmetry line 17.

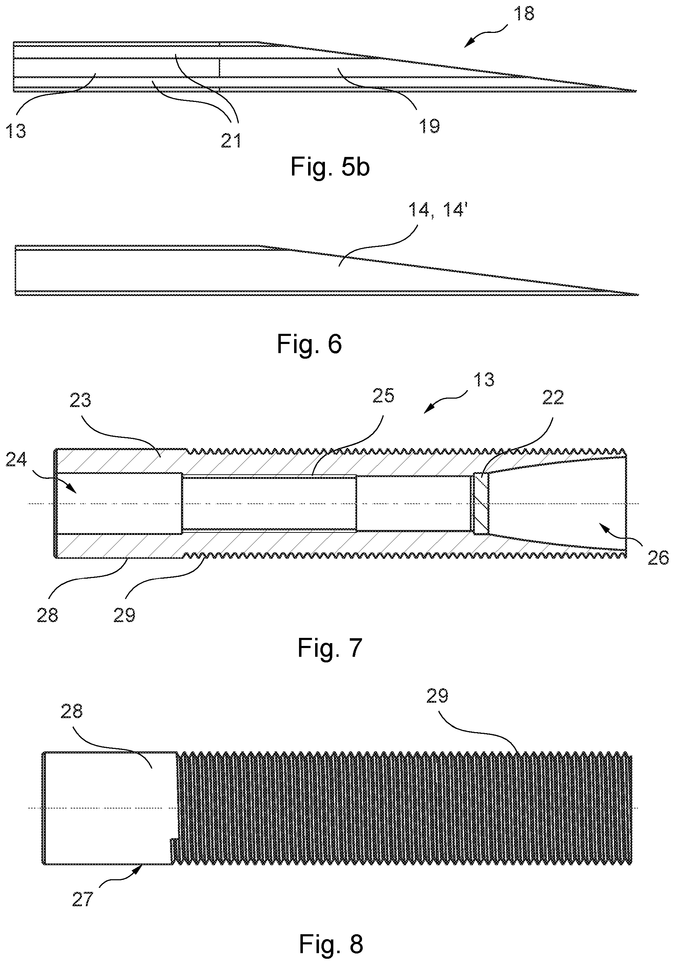

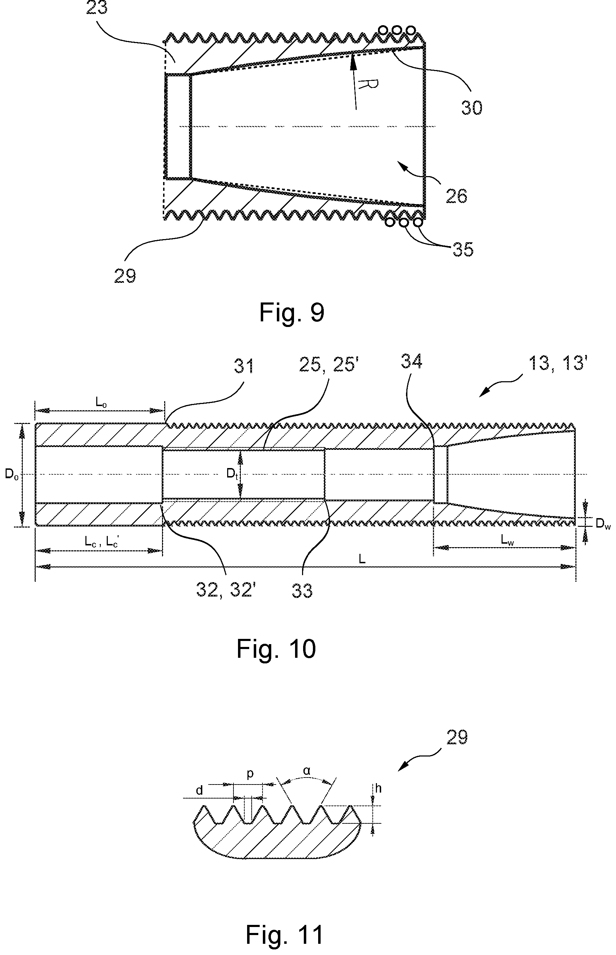

Figs. 5a-b show two exemplary embodiments of a bushing insert 18 according to the invention. The bushing insert 18 comprises the root bushing 13 and an insert element 19. The insert element 19 has an end portion 20 adapted to be inserted into a main bolt cavity (see fig. 9) of the root bushing 13.

The end portion 20 may be secured to the root bushing 13 by friction or an adhesive.

Additional insert elements 21 are arranged relative to the outer surface of the root bush-ing 13 and insert element 19. The additional insert elements 21 extend along the length of the root bushing 13 and insert element 19.

Fig. 6 shows an exemplary embodiment of the wedge element 14, 14'. The wedge ele-ment 14, 14' extends along the length of the root bushing 13 and insert element 19. The wedge element 14, 14' has a tapered end portion shaped to form a smooth transition between the inner and outer skin of the root portion 11.

Fig. 7 shows a first embodiment of the root bushing 13 with a cap element 22 according to the invention. The root bushing 13 has a bushing housing 23 extending from a first end to a second end. A main bolt cavity 24 is arranged at the first end and extend towards the second end. The main bolt cavity 24 has an inner threaded portion 25 adapted to engage a main bolt, when inserted into the main bolt cavity 24.

A root insert cavity 26 is arranged at the second end and extend towards the first end. The root insert cavity 26 is adapted to receive an end portion 20 of the insert element 19.

The outer surface 27 has a root portion (28) and a threaded portion (29) , which extends from a first starting point (see fig. 10) to the second end.

Fig. 8 shows the outer surface 27 of the root bushing 13. Here, it is clearly illustrated that the outer threaded portion (29) is a helical thread.

Fig. 9 shows an enhanced view of the second end of the root bushing 13, where the root insert cavity 26 is clearly illustrated. The root insert cavity 26 has an inner surface 30 extending from the second end towards the first end. The inner surface 30 is curved and has a radius of 500mm or more.

At least one layer of windings 35 is optionally arranged on the threaded portion 29 by wrapping a yarn around the outer surface 27 of the bushing 13. The windings 35 is positioned in the threads of the threaded portion 29.

Fig. 10 shows the root bushing 13 without the cap element 22. The bushing housing 23 has a total length L and an outer diameter Dₒ. The first start position 31 of the outer threaded portion 29 may be determined as a ratio of the local length, Lₒ, of the root portion 28 to the total length L of the bushing housing 23. The outer threaded portion 29 extends from the first start position 31 to the second end.

A second start position 32 of the inner threaded portion 25 is positioned at a distance Lc from the first end. The inner threaded portion 25 extends from the second start position 32 to a stop position 33. The second start position 32 is determined as a ratio of a local length, L_{c}, of outer portion of the first inner hole to the total length L of the bushing housing 23.

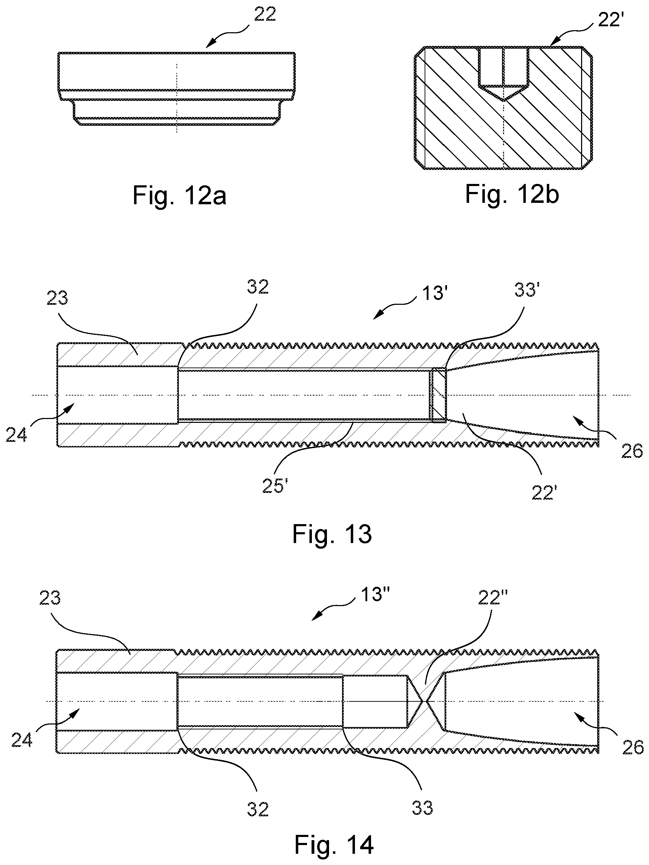

The cap element 22 is positioned at a distance L_{w} from the second end. The bushing housing 23 optionally comprises a shoulder 34 adapted to contact a matching shoulder on the cap element 22 (see fig. 12a). The position of the cap element 22 may be deter-mined as a ratio of the distance L_{w} to the total length L of the bushing housing 23.

The size of the root bushing 13 is determined as a ratio of the outer diameter Do of the bushing housing 23 to the inner diameter Dt of the inner threaded portion 25. The root bushing 13 has a local wall thickness, D_{w}, measured at the second end.

Optionally, the present invention also comprises a set of root bushings 13.13' for the wind turbine blade 5, comprising a first root bushing 13 and at least a second root bush-ing 13'. The second start position 32 of the inner threaded portion 25 of the first root bushing 13 differs from the second start position 32' of the inner threaded portion 25' of at least the second root bushing 13'.

Fig. 11 shows an enhanced view of the threaded portion 29 of the outer surface 27. The threaded portion 29 is shaped as a helical thread with an ISO metric cross-sectional profile.

The threads have a pitch p and a height h, and further a bottom width d and a sloping angle α. These values are determined according to international standards.

Figs. 12a-b show two exemplary embodiments of the cap element 22, 22' adapted to be secured within the bushing housing 23.

The cap element 22 has a local shoulder shaped to contact the shoulder 34 on the bush-ing housing 23. The cap element 22 is secured by press-or form-fitting.

The cap element 22' has an outer thread arranged at the sides and is adapted to secured to an inner thread of the bushing housing 23.

Fig. 13 shows a second embodiment of the root bushing 13' and cap element 22'. Here, the inner threaded portion 25' is extended to the root insert cavity 26. The cap element 22' is thus secured to the inner threaded portion 25' at the stop position 33.

Fig. 14 shows a third embodiment of the root bushing 13" and cap element 22". Here, the main bolt cavity 24 and the root insert cavity 26 is separated by the cap element 22". The cap element 22" is integrated into the bushing housing 23.

## Claims

1. A wind turbine (1), comprising a wind turbine blade (5), wherein the wind turbine blade (5) comprises a blade shell with a root end (7) and a tip end (8), wherein a plurality of root bushings (13) or root bushing inserts (18) are embedded in a root portion (11) of the blade shell, wherein each of the root bushings (13) comprises a bushing housing (23) having an outer surface (27) , where a main bolt cavity (24) is arranged inside the bushing housing (23) at a first end and has an inner threaded portion (25) adapted to engage a main bolt, when inserted into the main bolt cavity (24), and the outer surface (27) comprises a root portion (28) and an outer threaded portion (29), wherein the outer threaded portion (29) is formed as a helical thread with an ISO metric cross-sectional profile;
wherein each of the root bushing inserts (18) comprises a root bushing (13) with a root insert cavity (26) and an insert element (19) adapted to be inserted into the root insert cavity (26), wherein the root bushing (13) comprises a bushing housing (23) having an outer surface (27), wherein a main bolt cavity (24) is arranged inside the bushing housing (23) at a first end and has an inner threaded portion (25) adapted to engage a main bolt, when inserted into the main bolt cavity (24), and the outer surface (27) comprises a root portion (28) and an outer threaded portion (29), wherein the outer threaded portion (29) is formed as a helical thread with an ISO metric cross-sectional profile; and
wherein the root portion (11) comprises a first root bushing (13) and at least a second root bushing (13'), wherein a start position (32) of the inner threaded portion (25) of the first root bushing (13) differs from a start position (32') of the inner threaded portion (25') of at least the second root bushing (13').

2. The wind turbine according to claim 1, **characterised in that** the outer threaded portion (29) extends from a first start position (31) to a second end of the bushing housing (23), wherein the first start position (31) is located at a relative distance, L₀, from the first end and the relative distance L₀ is selected as a ratio between 0 -0.25 of an outer length L of the bushing housing (23).

3. The wind turbine according to claim 1 or 2, **characterised in that** a cap element (22) is further arranged inside the bushing housing (23) , where the root insert cavity (26) is arranged at a second end of the bushing housing (23) and the cap element (22) is configured to separate the main bolt cavity (24) from the root insert cavity (26) , and where the cap element (22) is located at a relative distance, L_{w} , from the second end and the relative distance L_{w} is selected as a ratio of an outer length, L, of the bushing housing (23), wherein the ratio is larger than 0 and less than or equal to 0.35.

4. The wind turbine according to any one of claims 1 to 3, **characterised in that** the bushing housing (23) has a local wall thickness, D_{w}, measured at the second end, wherein the local wall thickness D_{w} is selected between 0.5mm -5mm.

5. The wind turbine according to claim 3 or 4, **characterised in that** the cap element (22) is either integrated into the busing housing (23) or provided as a separate element, the separate element is shaped to be secured into the bushing housing (23) at the relative distance L_{w}.

6. The wind turbine according to any one of claims 3 to 5, **characterised in that** the inner threaded portion (25) extends from the start position (32) to a stop position (33) , wherein the cap element (22) is arranged adjacent to or within the inner threaded portion (25) , wherein the start position (32) is located at a relative distance, L c , from the first end and the relative distance L_{c} is selected as a ratio between 0 -0.5 of the outer length L of the bushing housing.

7. The wind turbine according to any one of claims 1 to 6, **characterised in that** the root insert cavity (26) has an inner surface (30) extending inwards from the second end, where the inner surface (30) is a curved surface with a radius, R, of at least 500mm.

8. The wind turbine according to any one of claims 1 to 7, **characterised in that** the bushing housing (23) has an outer diameter (Dₒ) and the main bolt cavity (26) has an inner diameter (Dt) measured at the inner threaded portion (25), where a ratio of the outer diameter (Dₒ) to the inner diameter (Dt) is selected between 1.7 -1.9.

9. The wind turbine according to any one of claims 1 to 8, **characterised in that** at least one set of windings is arranged at the outer threaded portion (29) on the outer surface (27).

10. The wind turbine according to claim 1, **characterised in that** one or more additional insert elements (21) are positioned relative to the root bushing (13) and the insert element (19), wherein said one or more additional insert elements (21) extend along the outer surfaces of the root bushing (13) and the insert element (19).

11. The wind turbine according to claim 1, **characterised in that** a wedge elements (14, 14') is arranged between a pair of adjacent root bushings (13) or root bushing inserts (18), wherein the wedge element (14, 14') has an asymmetrical or symmetrical cross-sectional profile perpendicular to the longitudinal direction.

12. A method of manufacturing the wind turbine blade (5) of the wind turbine (1) according to any one of claims 1-11, comprising the steps of:
- laying up one or more first fibrous layers (12) in a blade mould (6),
- arranging the plurality of root bushings (13) or root bushing inserts (18) on the first fibrous layers,
- laying up one or more second fibrous layers (15) on top of the root bushings (13) or root bushing inserts (18),
- infusing at least the first and second fibrous layers (12, 15) with a resin matrix material,
- curing the infused structure to form the blade shell.

13. The method according to claim 12, **characterised in that** the method further comprises the step of wrapping a yarn around at least a portion of the outer surface of the bushing or bushing insert, wherein the yarn forms at least one layer of windings.

## Patentansprüche

1. Windturbine (1), mit einem Windturbinenblatt (5), wobei das Windturbinenblatt (5) eine Blattschale mit einem Wurzelende (7) und einem Spitzenende (8) aufweist, wobei eine Mehrzahl von Wurzelbuchsen (13) oder Wurzelbuchseneinsätzen (18) in einem Wurzelabschnitt (11) der Blattschale eingebettet sind, wobei jede der Wurzelbuchsen (13) ein Buchsengehäuse (23) mit einer Außenfläche (27) aufweist, wobei ein Hauptbolzenhohlraum (24) innerhalb des Buchsengehäuses (23) an einem ersten Ende angeordnet ist und einen Innengewindeabschnitt (25) aufweist, der dazu ausgebildet ist, in einen Hauptbolzen einzugreifen, wenn dieser in den Hauptbolzenhohlraum (24) eingesetzt ist, und die Außenfläche (27) einen Wurzelabschnitt (28) sowie einen Außengewindeabschnitt (29) aufweist, wobei der Außengewindeabschnitt (29) als ein spiralförmiges Gewinde mit einem metrischen ISO-Querschnittsprofil ausgebildet ist;
wobei jeder der Wurzelbuchseneinsätze (18) eine Wurzelbuchse (13) mit einem Wurzeleinsatzhohlraum (26) und ein Einsatzelement (19) aufweist, das dazu ausgebildet ist, in den Wurzeleinsatzhohlraum (26) eingesetzt zu werden, wobei die Wurzelbuchse (13) ein Buchsengehäuse (23) mit einer Außenfläche (27) aufweist, wobei ein Hauptbolzenhohlraum (24) innerhalb des Buchsengehäuses (23) an einem ersten Ende angeordnet ist und einen Innengewindeabschnitt (25) aufweist, der dazu ausgebildet ist, in einen Hauptbolzen einzugreifen, wenn dieser in den Hauptbolzenhohlraum (24) eingesetzt ist, und die Außenfläche (27) einen Wurzelabschnitt (28) sowie einen Außengewindeabschnitt (29) aufweist, wobei der Außengewindeabschnitt (29) als ein spiralförmiges Gewinde mit einem metrischen ISO-Querschnittsprofil ausgebildet ist; und
wobei der Wurzelabschnitt (11) eine erste Wurzelbuchse (13) und mindestens eine zweite Wurzelbuchse (13') aufweist, wobei sich eine Startposition (32) des Innengewindeabschnitts (25) der ersten Wurzelbuchse (13) von einer Startposition (32') des Innengewindeabschnitts (25') mindestens der zweiten Wurzelbuchse (13') unterscheidet.

2. Windturbine nach Anspruch 1, **dadurch gekennzeichnet, dass** sich der Außengewindeabschnitt (29) von einer ersten Startposition (31) zu einem zweiten Ende des Buchsengehäuses (23) erstreckt, wobei die erste Startposition (31) in einem relativen Abstand L₀ von dem ersten Ende angeordnet ist und der relative Abstand L₀ als ein Verhältnis zwischen 0-0,25 einer Außenlänge L des Buchsengehäuses (23) ausgewählt ist.

3. Windturbine nach Anspruch 1 oder 2, **dadurch gekennzeichnet, dass** ferner ein Kappenelement (22) innerhalb des Buchsengehäuses (23) angeordnet ist, wobei der Wurzeleinsatzhohlraum (26) an einem zweiten Ende des Buchsengehäuses (23) angeordnet ist und das Kappenelement (22) eingerichtet ist, den Hauptbolzenhohlraum (24) von dem Wurzeleinsatzhohlraum (26) zu trennen, und wobei das Kappenelement (22) in einem relativen Abstand L_{w} von dem zweiten Ende angeordnet ist und der relative Abstand L_{w} als ein Verhältnis einer Außenlänge L des Buchsengehäuses (23) ausgewählt ist, wobei das Verhältnis größer als 0 und kleiner als oder gleich 0,35 ist.

4. Windturbine nach einem der Ansprüche 1 bis 3, **dadurch gekennzeichnet, dass** das Buchsengehäuse (23) eine lokale Wanddicke D_{w}, gemessen an dem zweiten Ende, aufweist, wobei die lokale Wanddicke D_{w} zwischen 0,5 mm-5 mm ausgewählt ist.

5. Windturbine nach Anspruch 3 oder 4, **dadurch gekennzeichnet, dass** das Kappenelement (22) entweder in das Buchsengehäuse (23) integriert ist oder als ein separates Element bereitgestellt ist, wobei das separate Element derart geformt ist, um in dem Buchsengehäuse (23) in dem relativen Abstand L_{w} gesichert zu werden.

6. Windturbine nach einem der Ansprüche 3 bis 5, **dadurch gekennzeichnet, dass** sich der Innengewindeabschnitt (25) von der Startposition (32) zu einer Stoppposition (33) erstreckt, wobei das Kappenelement (22) benachbart zu oder innerhalb des Innengewindeabschnitts (25) angeordnet ist, wobei die Startposition (32) in einem relativen Abstand Lc von dem ersten Ende angeordnet ist und der relative Abstand L_{c} als ein Verhältnis zwischen 0-0,5 der Außenlänge L des Buchsengehäuses ausgewählt ist.

7. Windturbine nach einem der Ansprüche 1 bis 6, **dadurch gekennzeichnet, dass** der Wurzeleinsatzhohlraum (26) eine Innenfläche (30) aufweist, die sich von dem zweiten Ende nach innen erstreckt, wobei die Innenfläche (30) eine gekrümmte Fläche mit einem Radius R von mindestens 500 mm ist.

8. Windturbine nach einem der Ansprüche 1 bis 7, **dadurch gekennzeichnet, dass** das Buchsengehäuse (23) einen Außendurchmesser (Dₒ) aufweist und der Hauptbolzenhohlraum (26) einen Innendurchmesser (Dₜ), gemessen an dem Innengewindeabschnitt (25), aufweist, wobei ein Verhältnis des Außendurchmessers (Dₒ) zu dem Innendurchmesser (Dₜ) zwischen 1,7-1,9 ausgewählt ist.

9. Windturbine nach einem der Ansprüche 1 bis 8, **dadurch gekennzeichnet, dass** mindestens ein Satz von Wicklungen an dem Außengewindeabschnitt (29) auf der Außenfläche (27) angeordnet ist.

10. Windturbine nach Anspruch 1, **dadurch gekennzeichnet, dass** ein oder mehrere zusätzliche Einsatzelemente (21) relativ zu der Wurzelbuchse (13) und dem Einsatzelement (19) angeordnet sind, wobei sich das eine oder die mehreren zusätzlichen Einsatzelemente (21) entlang der Außenflächen der Wurzelbuchse (13) und des Einsatzelements (19) erstrecken.

11. Windturbine nach Anspruch 1, **dadurch gekennzeichnet, dass** ein Keilelement (14, 14') zwischen einem Paar von benachbarten Wurzelbuchsen (13) oder Wurzelbuchseneinsätzen (18) angeordnet ist, wobei das Keilelement (14, 14') ein asymmetrisches oder symmetrisches Querschnittsprofil senkrecht zu der Längsrichtung aufweist.

12. Verfahren zum Herstellen des Windturbinenblatts (5) der Windturbine (1) nach einem der Ansprüche 1 bis 11, umfassend die Schritte:
- Auflegen einer oder mehrerer erster Faserschichten (12) in einer Blattform (6),
- Anordnen der Mehrzahl von Wurzelbuchsen (13) oder Wurzelbuchseneinsätzen (18) auf den ersten Faserschichten,
- Auflegen einer oder mehrerer zweiter Faserschichten (15) auf die Wurzelbuchsen (13) oder die Wurzelbuchseneinsätze (18),
- Infundieren zumindest der ersten und zweiten Faserschichten (12, 15) mit einem Harzmatrixmaterial,
- Aushärten der infundierten Struktur, um die Blattschale zu bilden.

13. Verfahren nach Anspruch 12, **dadurch gekennzeichnet, dass** das Verfahren ferner den Schritt Wickeln eines Garns um mindestens einen Abschnitt der Außenfläche der Buchse oder des Buchseneinsatzes umfasst, wobei das Garn mindestens eine Schicht von Wicklungen bildet.

## Revendications

1. Éolienne (1), comprenant une pale d'éolienne (5), dans laquelle la pale d'éolienne (5) comprend une paroi de pale avec une extrémité de racine (7) et une extrémité de pointe (8), dans laquelle une pluralité de bagues de racine (13) ou d'inserts de bague de racine (18) sont intégrés dans une partie de racine (11) de la paroi de pale, dans laquelle chacune des bagues de racine (13) comprend un logement de bague (23) présentant une surface extérieure (27), où une cavité de boulon principal (24) est disposée à l'intérieur du logement de bague (23) à une première extrémité et présente une partie filetée intérieure (25) adaptée pour s'engager dans un boulon principal, lorsqu'il est inséré dans la cavité de boulon principal (24), et la surface extérieure (27) comprend une partie de racine (28) et une partie filetée extérieure (29), dans laquelle la partie filetée extérieure (29) est formée comme un filetage hélicoïdal avec un profil de section transversale métrique ISO ;
dans laquelle chacun des inserts de bague de racine (18) comprend une bague de racine (13) avec une cavité d'insert de racine (26) et un élément d'insert (19) adapté pour être inséré dans la cavité d'insert de racine (26), dans laquelle la bague de racine (13) comprend un logement de bague (23) présentant une surface extérieure (27), dans laquelle une cavité de boulon principal (24) est disposée à l'intérieur du logement de bague (23) à une première extrémité et présente une partie filetée intérieure (25) adaptée pour s'engager avec un boulon principal, lorsqu'il est inséré dans la cavité de boulon principal (24), et la surface extérieure (27) comprend une partie de racine (28) et une partie filetée extérieure (29), dans laquelle la partie filetée extérieure (29) est formée d'un filetage hélicoïdal avec un profil de section transversale métrique ISO ; et
dans laquelle la partie de racine (11) comprend une première bague de racine (13) et au moins une seconde bague de racine (13'), dans laquelle une position de départ (32) de la partie filetée intérieure (25) de la première bague de racine (13) diffère d'une position de départ (32') de la partie filetée intérieure (25') d'au moins la seconde bague de racine (13').

2. Éolienne selon la revendication 1, **caractérisée en ce que** la partie filetée extérieure (29) s'étend depuis une première position de départ (31) à une seconde extrémité du logement de bague (23), dans laquelle la première position de départ (31) est située à une distance relative, L₀, de la première extrémité, et la distance relative L₀ est choisie comme un rapport entre 0 et 0,25 d'une longueur extérieure L du logement de bague (23).

3. Éolienne selon la revendication 1 ou 2, **caractérisée en ce qu'**un élément raidisseur (22) est en outre disposé à l'intérieur du logement de bague (23), où la cavité d'insertion de racine (26) est disposée à une seconde extrémité du logement de bague (23), et l'élément raidisseur (22) est configuré pour séparer la cavité de boulon principal (24) de la cavité d'insertion de racine (26), et où l'élément raidisseur (22) est situé à une distance relative, L_{w}, de la seconde extrémité, et la distance relative L_{w} est choisie comme un rapport de la longueur extérieure, L, du logement de bague (23), dans laquelle le rapport est supérieur à 0 et inférieur ou égal à 0,35.

4. Éolienne selon l'une quelconque des revendications 1 à 3, **caractérisée en ce que** le logement de bague (23) présente une épaisseur de paroi locale, D_{w}, mesurée à la seconde extrémité, dans laquelle l'épaisseur de paroi locale D_{w} est choisie entre 0,5 mm et 5 mm.

5. Éolienne selon la revendication 3 ou 4, **caractérisée en ce que** l'élément raidisseur (22) est soit intégré dans le logement de bague (23), soit fourni comme un élément séparé, l'élément séparé est conçu pour être fixé dans le logement de bague (23) à la distance relative L_{w}.

6. Éolienne selon l'une quelconque des revendications 3 à 5, **caractérisée en ce que** la partie filetée intérieure (25) s'étend depuis la position de départ (32) à une position d'arrêt (33), dans laquelle l'élément raidisseur (22) est disposé de manière adjacente ou à l'intérieur de la partie filetée intérieure (25), dans laquelle la position de départ (32) est située à une distance relative, L c , de la première extrémité, et la distance relative L_{c} est choisie comme un rapport entre 0 et 0,5 de la longueur extérieure L du logement de bague.

7. Éolienne selon l'une quelconque des revendications 1 à 6, **caractérisée en ce que** la cavité d'insertion de racine (26) présente une surface intérieure (30) s'étendant vers l'intérieur depuis la seconde extrémité, où la surface intérieure (30) est une surface courbe avec un rayon, R, d'au moins 500 mm.

8. Éolienne selon l'une quelconque des revendications 1 à 7, **caractérisée en ce que** le logement de bague (23) présente un diamètre extérieur (Dₒ), et la cavité de boulon principal (26) présente un diamètre intérieur (Dt) mesuré au niveau de la partie filetée intérieure (25), où un rapport du diamètre extérieur (Dₒ) au diamètre intérieur (Dt) est choisi entre 1,7 et 1,9.

9. Éolienne selon l'une quelconque des revendications 1 à 8, **caractérisée en ce qu'**au moins un ensemble d'enroulements est disposé au niveau de la partie filetée extérieure (29) sur la surface extérieure (27).

10. Éolienne selon la revendication 1, **caractérisée en ce qu'**un ou plusieurs éléments d'insert supplémentaires (21) sont positionnés par rapport à la bague de racine (13) et à l'élément d'insert (19), dans laquelle lesdits un ou plusieurs éléments d'insert supplémentaires (21) s'étendent le long des surfaces extérieures de la bague de racine (13) et de l'élément d'insert (19).

11. Éolienne selon la revendication 1, **caractérisée en ce qu'**un élément en forme de coin (14, 14') est disposé entre une paire de bagues de racine (13) ou d'inserts de bague de racine (18) adjacents, dans laquelle l'élément en forme de coin (14, 14') présente un profil de section transversale asymétrique ou symétrique perpendiculaire à la direction longitudinale.

12. Procédé de fabrication de la pale (5) de l'éolienne (1) selon l'une quelconque des revendications 1-11, comprenant les étapes suivantes :
- la superposition d'une ou plusieurs premières couches fibreuses (12) dans un moule de pale (6),
- la disposition de la pluralité de bagues de racine (13) ou d'inserts de bagues de racine (18) sur les premières couches fibreuses,
- la superposition d'une ou de plusieurs secondes couches fibreuses (15) sur le dessus des bagues de racine (13) ou des inserts de bagues de racine (18),
- l'imprégnation d'au moins les première et seconde couches fibreuses (12, 15) avec un matériau de matrice résineuse,
- le durcissement de la structure imprégnée pour former la paroi de pale.

13. Procédé selon la revendication 12, **caractérisé en ce que** le procédé comprend en outre l'étape d'enroulement d'un fil autour d'au moins une partie de la surface extérieure de la bague ou de l'insert de bague, dans lequel le fil forme au moins une couche d'enroulements.
